# EUROPEAN PATENT SPECIFICATION

(11) **EP 0 677 430 B1**
(45) Date of publication and mention of the grant of the patent: **18.06.1997**
(21) Application number: 95102171.6
(22) Date of filing: 16.02.1995
(51) Int. Cl.: B60R 19/22, B60R 19/24

(54) **An automobile bumper**
Stossfänger für Fahrzeuge
Pare-chocs pour automobile

(30) Priority: 14.04.1994 IT TO940294
(43) Date of publication of application: 18.10.1995
(73) Proprietor: FIAT AUTO S.p.A., 10135 Torino (IT)
(72) Inventor: Marzana, Luigi, I-20161 Milano (IT)
(74) Representative: Di Francesco, Gianni

(56) References cited:
- US-A- 3 850 466
- US-A- 4 457 547
- US-A- 4 762 352
- PATENT ABSTRACTS OF JAPAN vol. 8, no. 90 (M-292) 25 April 1984 & JP-A-59 006 154 (NISSAN JIDOSHA K.K.) 13 January 1984

## Description

The present invention refers to an automobile bumper.

At present there are known bumpers made of a foam body rigidly fixed to the vehicle body. A rigid outer shell of semi-rigid plastic material is then rigidly secured to the foam body. The outer shell is an additional finishing member that is not meant to work as a bumper. The bumper function is demanded to the foam body and the corresponding cross member of the vehicle body (US-A-4,762,352).

The above kind of arrangement, that replaces conventional bumpers made of a single piece, allows to have to replace only the outer half-shell in case of serious damage. However, as the bumper consists of more than one piece, a number of adjustments have to be carried out to assemble and mount the bumper for eliminating clearance between the various pieces.

It is an object of this invention to provide a new system of binding the outer half-shell to the vehicle body, so as to recuperate clearances in any direction.

It is another object of the present invention to provide a binding system of the half-shell capable of facilitating mounting operations and allowing to avoid particular adjustments and relevant loss of time.

Another limit concerning prior art is represented by the fact that the half-shell, having to be rigidly secured to its supporting member, is not capable of absorbing shocks, even small entity ones.

Accordingly, it is a further object of this invention to provide a system for binding the outer protection half-shell which allows the latter to accomplish small oscillatory movements in a vertical lengthwise plane and transverse vertical plane, absorbing small crashes and regaining its own original position.

In accordance with one aspect of the invention as claimed, these objects are accomplished by the provision of an automobile bumper, of the type consisting of two complementary joining parts:
a body of crash yieldable material fixed to the vehicle body;
a shell of semi-rigid material substantially congruent with the external outline of said body and covering the outer part thereof;
   characterised in that the shell is secured to the vehicle body by means of a double hinge securing system, whereby said shell is capable of oscillating relative to the vehicle body and said body in a longitudinal vertical plane and in a transversal vertical plane.

In order that the present invention may be well understood there will now be described a few preferred embodiments thereof, given by way of example, reference being made to the accompanying drawings, in which:
- FIG. 1: is a perspective view of a bumper according to the present invention mounted to the rear of an automobile;
- FIG. 2: is a partially sectioned view, to an enlarged scale, of the bumper taken along line A-A of FIG. 1;
- FIG. 3: is an exploded perspective view of the bumper of FIG. 2;
- FIG. 4: is a view, similar to that of FIG. 3, depicting an alternative embodiment of the invention; and
- FIG. 5: is a view, similar to those of FIGS. 3 and 4, depicting a further variant concerning mounting of the bumper of this invention.

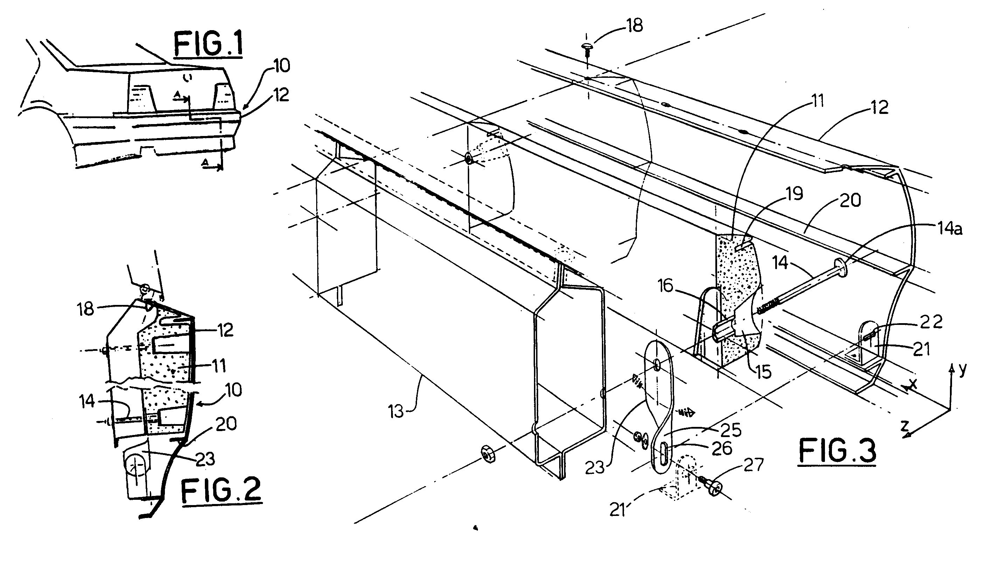

With reference initially to FIGS. 1 to 3, a bumper 10 according to the present invention essentially consists of the union of two pieces: a body 11 of foam or other material capable of yielding to absorb considerable crashes, and an outer protection shell 12 of semi-rigid plastic material, preferably polypropylene. Shell 12 is so shaped as to be substantially congruent with the external outline of body 11.

Foam body 11, preferably of propylene, is mounted to the vehicle body. More particularly, body 11 is fixed to cross member 13 of the vehicle body by means of a number of fastening screws 14.

Special outwardly diverging openings 15 of substantially frustoconical shape are obtained in foam body 11. The inwardly facing portion of each opening 15 is fitted with a tubular distance tube 16 for contrasting head portions 14a.

Preferably, as shown in FIG. 2, shell 12 is also connected directly to cross member 13 by a centring pin 18 for facilitating correct mounting of the shell.

One or more longitudinal grooves 19 can be provided on the outer side of body 11, according to the design of outer shell 12. Grooves 19 are so shaped as to seat corresponding stiffening ribs 20 of the shell.

As said, shell 12 is at first connected to the top portion of cross member 13. Then, the sides are connected to the body-work, while the bottom is fitted with a double hinge securing system connecting the shell to the vehicle body enabling the latter to perform small oscillatory movements about two perpendicular axes (x and y).

According to the present invention, a first bracket 21 is integral with one of the stiffening ribs 20. Bracket 21 is obtained as a whole with said rib or successively fixed thereto. A slot 22 is provided on bracket 21 substantially parallel to longitudinal axis z (FIG. 3). A second bracket 23 is interposed between foam body 11 and cross member 13. Bracket 23 has an upper bore 24 for accommodating one of the screws 14 so that once the shell is mounted, bracket 23 is between body 11 and cross member 13 while being capable of rotating to some extent in a vertical plane about fastening screw 14, as indicated by arrows in FIG. 3. Bracket 23 consists of a rigid, elongated flat member twisted longitudinally 90 degrees so that its lower side 25 lies in a plane substantially parallel to that of slot 22 obtained in the first bracket. A vertical slot 26 is obtained in side 25 parallel to slot 22, whereby as the outer shell 12 is being mounted, the two facing slots 22, 26 determine a common opening point in which a bolt 27 is inserted and fastened.

Owing to this particular hinging arrangement, in case of crashes occurring shell 12 can elastically absorb the shock by oscillating in a vertical longitudinal plane (yz) about the axis of bolt 27. Simultaneously, slight transverse oscillation is permitted about screw 14. These oscillations, in combination with the elongated shape of slots 22 and 26 allow to recover cut down clearances during assembling operations. Particularly, rotation of bracket 23 about screw 14 allows to regain clearances in the direction of axis x, horizontal slot 22 allows clearance regain in the horizontal direction of axis z, while slot 26 provides regain in the vertical direction of axis y. Obviously, this securing system provides for return of the shell 12 to its original position after the crash.

Besides absorbing elastically crashes while the vehicle is being used, the disclosed perpendicular slot fastening arrangement provides for cutting down clearance in the longitudinal and vertical directions during assembling. Oscillation of bracket 23 allows to recuperate clearance in the transversal direction.

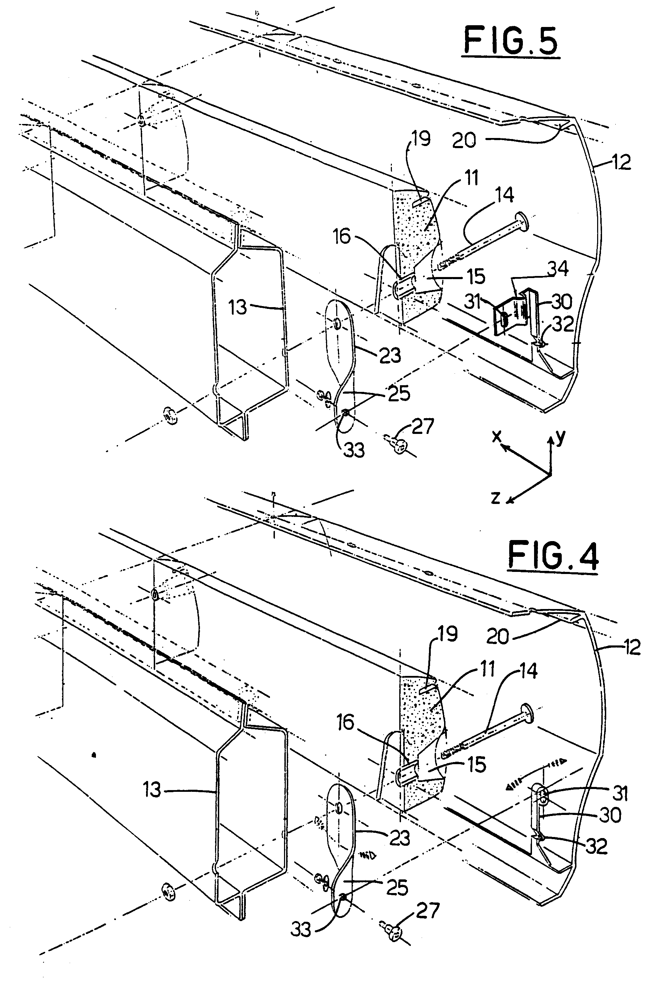

With reference to FIG. 4, according to a second preferred embodiment of the present invention, flexibility in the vertical longitudinal plane is achieved by means of a flexible bracket 30 obtained as a whole with the outer shell. The free end portion of flexible bracket 30 is provided with a vertical slot 31 oriented in the vertical longitudinal plane yz. Near the point of connection to the outer shell 12, flexible bracket 30 forms a horizontally folded portion 32 providing required flexibility in a longitudinal vertical plane. Connection to intermediate bracket 23 also in this case is attained by means of a bolt 27 which inserts in vertical slot 31 and a circular opening 33 of bracket 23. Flexibility of bracket 30 renders overlapping of the two slots easy.

FIG. 5 depicts a further embodiment of the bumper according to the present invention. This example differs from the embodiment of FIG. 4 in that the bracket provides a further vertically folded portion 35 that renders the shell capable of oscillating elastically also in the horizontal plane xz.

## Claims

1. An automobile bumper, of the type consisting of two complementary joining parts:
a body (11) of crash yieldable material fixed to the vehicle body (13);
a shell (12) of semi-rigid material substantially congruent with the external outline of said body (11) and covering the outer part thereof;
characterised in that the shell (12) is secured to the vehicle body (13) by means of a double hinge securing system, whereby said shell (12) is capable of oscillating relative to the vehicle body (13) and said body (11) in a longitudinal vertical plane (yz) and in a transversal vertical plane (xy).

2. A bumper according to claim 1, characterised in that said double hinge securing system comprises a first bracket (23) having a first end portion hinged (14) for rotation in a transversal vertical plane (xy) to the vehicle body (13); said first bracket (23) having a second end portion hinged (27) for rotation in a longitudinal vertical plane (yz) to a second bracket (21, 30) extending from said shell (12).

3. A bumper according to claim 2, characterised in that said second bracket (21, 30) is obtained as a whole with said shell (12).

4. A bumper according to claim 2, characterised in that said first bracket (23) consists of a rigid, elongated flat member twisted longitudinally 90 degrees.

5. A bumper according to claim 2, characterised in that said second end portion of said first bracket (23) provides a vertical longitudinal wall (25) wherein a first opening (26, 33) is obtained; a second opening (22, 31) substantially parallel to said first opening (26, 33) being obtained in said second bracket (21, 30); upon overlapping, said first (26, 33) opening and said second (22, 31) opening determining a common opening adapted for accommodating a fastening member (27) for securing said first (23) bracket to said second bracket (21, 30).

6. A bumper according to claim 5, characterised in that said first opening (26) is a vertical slot and that said second opening (22) is a horizontal slot.

7. A bumper according to claim 5, characterised in that said first opening (33) is a circular bore and that said second opening (31) is a vertical slot; said second bracket (30) forming a portion (32) folded parallel to the transversal axis (x) for rendering its end portion having the slot (31) flexible in the longitudinal vertical plane (yz).

8. A bumper according to claim 7, characterised in that said second bracket (32) forms another folded portion (35) parallel to the vertical axis (y) for rendering its end portion having the slot (31) flexible also in the horizontal plane (xz).

9. A bumper according to claims 1 and 2, characterised in that the first bracket (23) is hinged to the vehicle body (13) through a member (14) adapted for fixing said body (11) to the vehicle body.

10. A bumper according to claim 1, characterised in that the shell (12) is directly secured to the vehicle body (13) through a centring pin (18).

## Patentansprüche

1. Stoßfänger für Fahrzeuge, der aus zwei komplementären verbindenden Teilen besteht:
einem Körper (11) aus bruchfestem Material, der an dem Fahrzeugkörper (13) befestigt ist;
einer Schale (12) aus halbfestem Material, die im wesentlichen deckungsgleich ist mit dem äußeren Umriß des Körpers (11) und dessen äußeren Teil bedeckt;
dadurch gekennzeichnet,
daß die Schale (12) mittels eines doppelgelenkigen Befestigungssystems an dem Fahrzeugkörper (13) befestigt ist, wobei die Schale (12) bezüglich des Fahrzeugkörpers (13) und des Körpers (11) in einer längsverlaufenden vertikalen Ebene (yz) und in einer querverlaufenden vertikalen Ebene (xy) oszillieren kann.

2. Stoßfänger nach Anspruch 1,
dadurch gekennzeichnet,
daß das doppelgelenkige Befestigungssystem eine erste Schelle (23) umfaßt, deren erster Endabschnitt an dem Fahrzeugkörper (13) zur Drehung in einer querverlaufenden vertikalen Ebene (xy) drehbar befestigt (14) ist;
daß die erste Schelle (23) einen zweiten Endabschnitt aufweist, der zur Drehung in einer längsverlaufenden vertikalen Ebene (yz) mit einer zweiten Schelle (21, 30) drehbar verbunden ist, die sich von der Schale (12) erstreckt.

3. Stoßfänger nach Anspruch 2,
dadurch gekennzeichnet,
daß die zweite Schelle (21, 30) als ein Stück mit der Schale (12) ausgebildet ist.

4. Stoßfänger nach Anspruch 2,
dadurch gekennzeichnet,
daß die erste Schelle (23) aus einem starren, länglichen flachen Element besteht, das in Längsrichtung um 90° verwunden ist.

5. Stoßfänger nach Anspruch 2,
dadurch gekennzeichnet,
daß der zweite Endabschnitt der ersten Schelle (23) eine vertikale in Längsrichtung verlaufende Wand (25) aufweist, in der eine erste Öffnung (26, 33) gebildet ist; daß eine zweite Öffnung (22, 31), die im wesentlichen parallel zur ersten Öffnung (26, 33) verläuft, in der zweiten Schelle (21, 30) gebildet ist; daß bei Überlappung die erste Öffnung (26, 33) und die zweite Öffnung (22, 31) eine gemeinsame Öffnung bilden, die zur Aufnahme eines Befestigungselements (27) zur Fixierung der ersten Schelle (23) mit der zweiten Schelle (21, 30) geeignet ist.

6. Stoßfänger nach Anspruch 5,
dadurch gekennzeichnet,
daß die erste Öffnung (26) ein vertikaler Schlitz ist und daß die zweite Öffnung (22) ein horizontaler Schlitz ist.

7. Stoßfänger nach Anspruch 5,
dadurch gekennzeichnet,
daß die erste Öffnung (33) eine kreisförmige Bohrung ist und daß die zweite Öffnung (31) ein vertikaler Schlitz ist; daß die zweite Schelle (30) einen Abschnitt (32) bildet, der parallel zu der Querachse (x) gefaltet ist, um ihren Endabschnitt, der den Schlitz (31) aufweist, in der längsverlaufenden vertikalen Ebene (yz) flexibel zu machen.

8. Stoßfänger nach Anspruch 7,
dadurch gekennzeichnet,
daß die zweite Schelle (32) einen anderen gefalteten Abschnitt (35) parallel zur vertikalen Achse (y) bildet, um ihren Endabschnitt, der den Schlitz (31) aufweist, auch in der horizontalen Ebene (xz) flexibel zu machen.

9. Stoßfänger nach den Ansprüche 1 und 2,
dadurch gekennzeichnet,
daß die erste Schelle (23) durch ein Element (14) gelenkig mit dem Fahrzeugkörper (13) verbunden ist, welches geeignet ist, den Körper (11) an dem Fahrzeugkörper zu befestigen.

10. Stoßfänger nach Anspruch 1,
dadurch gekennzeichnet,
daß die Schale (12) durch einen Zentrierstift (18) direkt an dem Fahrzeugkörper (13) befestigt ist.

## Revendications

1. Pare-chocs d'automobile du type consistant en deux parties complémentaires s'assemblant :
un corps (11) en un matériau qui peut céder sous l'effet d'une collision et qui est fixé à la caisse (13) du véhicule ;
une coquille (12) an un matériau semi-rigide coïncidant sensiblement avec le contour extérieur du corps (11) et en recouvrant la partie extérieure ;
caractérisé en ce que la coquille (12) est fixée à la caisse (13) du véhicule au moyen d'un système de fixation à double articulation, la coquille (12) étant ainsi susceptible d'osciller par rapport à la caisse (13) du véhicule et au corps (11) dans un plan (yz) longitudinal vertical et dans un plan (xy) transversal vertical.

2. Pare-chocs suivant la revendication 1, caractérisé en ce que système de fixation à double articulation comprend une première patte (23) ayant une première partie d'extrémité articulée (14) de manière à pouvoir tourner dans un plan (xy) transversal vertical par rapport à la caisse (13) du véhicule ; la première patte (13) ayant une seconde partie d'extrémité articulée (27) de manière à pouvoir tourner dans un plan (yz) longitudinal vertical par rapport à une seconde patte (21, 30) issue de la coquille (12).

3. Pare-chocs suivant la revendication 2, caractérisé en ce que la seconde patte (21, 30) est d'un seul tenant avec la coquille (12).

4. Pare-chocs suivant la revendication 2, caractérisé en ce que la premier patte (23) consiste en un élément rigide oblong tordu longitudinalement de 90 degrés.

5. Pare-chocs suivant la revendication 2, caractérisé en ce que la seconde partie d'extrémité de la première patte (23) ménage une paroi (25) verticale longitudinale de manière à obtenir une première ouverture (26, 33) ; une seconde ouverture (22, 31) sensiblement parallèle à la première ouverture (26, 33) étant obtenue dans la seconde patte (21, 30) ; et, après mise en chevauchement, la première ouverture (26, 33) et la seconde ouverture (22, 31) déterminant une ouverture commune apte à recevoir un élément (27) de fixation destiné à fixer la première patte (23) à la seconde patte (21, 30).

6. Pare-chocs suivant la revendication 5, caractérisé en ce que la première ouverture (26) est une fente verticale et la seconde ouverture (22) est une fente horizontale.

7. Pare-chocs suivant la revendication 5, caractérisé en ce que la première ouverture (33) est un alésage circulaire et la seconde ouverture (31) est une fente verticale ; la seconde patte (30) formant une partie (32) pliée parallèlement à l'axe (x) transversal pour rendre sa partie d'extrémité ayant la fente (31) souple dans le plan (yz) longitudinal vertical.

8. Pare-chocs suivant la revendication 7, caractérisé en ce que la seconde patte (32) forme une autre partie (35) pliée parallèle à l'axe (y) vertical pour rendre sa partie d'extrémité ayant la fente (31) souple également dans le plan (xz) horizontal.

9. Pare-chocs suivant l'une des revendications 1 et 2, caractérisé en ce que la première patte (23) est articulée à la caisse (13) du véhicule par un élément (14) apte à fixer le corps (11) à la caisse du véhicule

10. Pare-chocs suivant la revendication 1, caractérisé en ce que la coquille (12) est fixée directement à la caisse (13) du véhicule par une goupille (18) de centrage.
